(19) Europäisches Patentamt / European Patent Office / Office européen des brevets

(11) **EP 3 248 988 B1**

(12) **EUROPEAN PATENT SPECIFICATION**

(45) Date of publication and mention of the grant of the patent:
**02.12.2020 Bulletin 2020/49**

(51) Int Cl.:
***C08C 19/02*** (2006.01)

(21) Application number: **16170854.0**

(22) Date of filing: **23.05.2016**

(54) **HYDROGENATION OF NITRILE GROUPS IN HYDROGENATED NITRILE BUTADIENE RUBBER AND TANDEM HYDROGENATION OF NITRILE GROUPS AND OLEFINIC GROUPS IN NITRILE BUTADIENE RUBBER USING AN UNSUPPORTED RHODIUM CONTAINING CATALYST**

HYDRIERUNG VON NITRILGRUPPEN IN HYDRIERTEM NITRILBUTADIENGUMMI UND TANDEMHYDRIERUNG VON NITRILGRUPPEN UND OLEFINGRUPPEN IN NITRILBUTADIENGUMMI MIT UNGETRÄGERTEM RHODIUMHALTIGEM KATALYSATOR

HYDROGÉNATION DE GROUPES NITRILES DANS UN CAOUTCHOUC NITRILE-BUTADIÈNE HYDROGÉNÉ ET HYDROGÉNATION TANDEM DE GROUPES NITRILES ET DE GROUPES OLÉFINIQUES DANS UN CAOUTCHOUC NITRILE-BUTADIÈNE À L'AIDE D'UN CATALYSEUR CONTENANT DU RHODIUM NON SUPPORTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2017 Bulletin 2017/48**

(73) Proprietor: **UNIVERSITY OF WATERLOO**
**Waterloo, Ontario N2L 3G1 (CA)**

(72) Inventors:
- **REMPEL, Garry L.**
  **Waterloo, Ontario N2T 2H4 (CA)**
- **PAN, Qinmin**
  **Waterloo, Ontario N2T 2W9 (CA)**
- **LIU, Minghui**
  **Waterloo, Ontario, N2T 2W9 (CA)**

(74) Representative: **Hollah, Dorothee**
**Patentanwälte**
**Isenbruck Bösl Hörschler PartG mbB**
**Eastsite One**
**Seckenheimer Landstrasse 4**
**68163 Mannheim (DE)**

(56) References cited:

WO-A1-01/85806          US-A- 4 464 515
US-A1- 2003 171 500

- **MCMANUS, N.T.; REMPEL G.I.: "Improvements in the Hydrogenation of Nitrile Rubber using Wilkinson's Catalyst.", RUBBER CHEMISTRY & TECHNOLOGY, vol. 81, no. 2, May 2008 (2008-05), pages 227-243, XP009191453, USA DOI: 10.5254/1.3548207**
- **PARENT, SCOTT J.;MCMANUS, NEIL T.;REMPEL, GARY L.: IND.ENG.CHEM.RES, vol. 35, 4 December 1996 (1996-12-04), pages 4417-4423, XP002761074, DOI: 10.1021/ie9506680**
- **YOSHIDA, T.; OKANO, T.;OTSUKA, S.: "Catalytic hydrogenation of nitriles and dehydrogenation of amines with the rhodium(I) hydrido compounds [RhH(PPri3)3] and [Rh2H2(μ-N2){P(cyclohexyl)3}4]", JOURNAL OF THE CHEMICAL SOCIETY, CHEMICAL COMMUNICATIONS, vol. 19, 1979, pages 870-871, XP002761075, UK DOI: 10.1039/C39790000870**
- **TOTI A ET AL: "Activation of single and multiple C-N bonds by Ru(II) catalysts in homogeneous phase", COMPTES RENDUS - CHIMIE, ELSEVIER, PARIS, FR, vol. 7, no. 8-9, 1 August 2004 (2004-08-01), pages 769-778, XP027553177, ISSN: 1631-0748 [retrieved on 2004-08-27]**

EP 3 248 988 B1

## Description

The present invention relates to a process for the hydrogenation of the carbon-nitrogen triple bonds (nitrile groups) in hydrogenated acrylonitrile butadiene rubber (HNBR) and for the tandem hydrogenation of carbon-nitrogen triple bonds and carbon-carbon double bonds (olefinic groups) in nitrile butadiene rubber (NBR) in solution form by treatment of the polymer with hydrogen in the presence of an unsupported rhodium containing catalyst (a) and an additive (b).

Diene-based nitrile rubbers, for example nitrile butadiene rubbers (NBR) or hydrogenated nitrile butadiene rubbers (HNBR) produced through polymerization of acrylonitrile and butadiene are well-known in the art. Unsaturated diene-based polymers such as NBR are used for a variety of purposes in industry; moreover processes for hydrogenating such polymers are well-known in the art.

It is known that carbon-carbon double bonds in polymers may be successfully hydrogenated by treating the polymer in an organic solution with hydrogen in the presence of a catalyst, as disclosed in US-B-6,881,797, US-B-6,683,136, US-B-6,410,657, US-A-6,020,439, US-A-5,705,571, US-A-5,057,581 and US-A-3,454,644. Such processes can be **selective** in the double bonds which are hydrogenated so that, for example, the double bonds in aromatic or naphthenic groups are not hydrogenated and double or triple bonds between carbon and other atoms such as nitrogen or oxygen are not affected. This field of art contains many examples of catalysts suitable for such hydrogenations, including catalysts based on cobalt, nickel, rhodium, ruthenium, osmium, and palladium. The suitability of the catalyst depends on the extent of hydrogenation required, the rate of the hydrogenation reaction and the presence or absence of other groups, such as carboxyl and nitrile groups, in the polymers.

However, published reports focusing on the hydrogenation of polymer based nitriles are rare. Most of the reports in this area are regarding the hydrogenation of small molecular nitriles, such as benzonitrile. In the hydrogenation of nitriles, primary amines are not the only products; imines, secondary amines and sometimes tertiary amines are also formed from the reaction of imines and amines. Both homogeneous and heterogeneous catalysts have been investigated for the hydrogenation of nitriles, and the hydrogenation with alternative hydrogen resources has also been reported.

**JACS, 99, 7380 (1977)** discloses the hydrogenation of nitriles with Ni clusters such as $Ni_4(CNR)_7$. However, the selectivity to primary amine was not high.

In Applied Catalysis A: General, 296, 2005, 209-215 and Applied Catalysis A: General, 349, 2008, 40-45, M. Chatterjee et al. Green Chemistry, 12, 2010, 87-93, nitrile hydrogenation of benzonitriles using palladium catalysts over a variety of supports (carbon, $Al_2O_3$ and $TiO_2$) is disclosed. A conversion of about 100 % was obtained at moderate temperatures and pressures.

In Chemical Engineering Journal, 103, 2004, 13-19, a process for selective hydrogenation of nitriles in benzonitriles using Raney nickel catalyst, with a conversion of 99 % and addition of ammonia is disclosed. The addition of extra $NH_3$ can suppress the dissociation of $NH_3$ from amines and the generation of secondary and tertiary amines and more imines; acids react with primary amine to form salts and thus protect the primary amine.

In J. Chem. Soc. Chem. Commun., 1979, 870, the hydrogenation of small molecular nitriles using homogeneous rhodium hydrides $[RhH(PiPr_3)_3]$ and $[Rh_2H_2(p\text{-}N_2)\{P(cyclohexyl)_3\}_4]$ is disclosed. It is reported that there was no formation of secondary or tertiary amines. The catalysts are active for the hydrogenation under ambient conditions.

US-A-3,454,644 discloses that $[RuCl_2(PPh_3)_3]$ was used for the hydrogenation of benzonitrile in ethanol. When 85 % of theoretical amount of hydrogen was consumed, the yield of benzylamine was 29 %, which implies the selectivity was lower than 40 %.

C. R. Chimie 7 (2004) 769-778 discloses the hydrogenation of nitriles catalyzed by $RuH_2(CO)_2(PnBu_3)_2$, $RuH_2(CO)_2(PPh_3)_2$ and $RuH_2(PPh_3)_4$ without addition of any additives. However under the range of their reaction conditions, both conversion (<80 %) and selectivity (<50 %) are quite low.

However, despite of high conversion, the **selectivity of heterogeneous catalyst is relatively poor,** and side products such as secondary and tertiary amines cannot be totally eliminated. In the case of diene-based polymers like NBR or HNBR, trace of formation of these amines may cause **severe gel formation** of polymer chains. And the contamination of additives arises the separation and recovery issues.

To obtain high selectivity and to prevent gel formation, homogeneous catalysts for hydrogenation of nitriles in polymers have received extensive attention.

In summary, the research in hydrogenation of nitriles of small-molecule compound has been successful using both heterogeneous and homogeneous catalysts. However, the **research** activities clearly focused **on hydrogenation of polymers** is so far very limited. Research results from small molecules cannot be transformed without more ado to large and bulky molecules like polymers. The present invention therefore had the **object** to provide a new and improved process allowing the hydrogenation of nitriles in diene-base nitrile rubbers **in solution form** with a **high degree of hydrogenation** without the formation of gel, preferably within **acceptable short reaction time** and preferably at **mild reaction temperatures.**

The present invention relates to a **process** for the hydrogenation of the carbon-nitrogen triple bonds (nitrile groups) in hydrogenated acrylonitrile butadiene rubber (HNBR) and for the tandem hydrogenation of carbon-nitrogen triple bonds and carbon-carbon double bonds (olefinic groups) in nitrile butadiene rubber (NBR) in solution form, that being a copolymer comprising $\alpha,\beta$-ethylenically unsaturated nitrile-group containing monomer unit, conjugated diene unit and optionally at least one further copolymerizable monomer, comprising subjecting the diene-based nitrile rubber which is present in solution form to a hydrogenation in the presence of

(a) an unsupported **rhodium containing catalyst**
wherein the unsupported rhodium containing **catalyst (a)** is tri-(triisopropyphosphine)-hydrido-rhodium, $RhH(PiPr_3)_3$, and

(b) an **additive** of the general formula (II), preferably triphenylphosphine (TPP),

$$R_m B \qquad (II)$$

wherein

R  is a $C_1$-$C_8$-alkyl group, preferably a $C_1$-$C_6$-alkyl group, a $C_4$-$C_8$-cycloalkyl group, preferably a $C_4$-$C_6$-cycloalkyl group, a $C_6$-$C_{15}$-aryl group, preferably a $C_6$-$C_{12}$-aryl group or a $C_7$-$C_{15}$-aralkyl group, preferably a $C_7$-$C_{12}$-aralkyl group,

B  is phosphorus, arsenic, sulfur, or a sulphoxide group, preferably phosphorus, and

m  is 2 or 3, preferably m is 2 when B is sulphur or sulphoxide, and m is 3 when B is phosphorus or arsenic, and

x  is 2, 3 or 4, preferably x is 3 when Q is halogen and preferably x is 4 when Q is hydrogen.

DETAILED DESCRIPTION OF THE INVENTION

**Nitrile rubbers** having carbon-nitrogen triple bonds which may be subjected to the inventive process comprise repeating units based on at least one $\alpha,\beta$-ethylenically unsaturated nitrile-group containing monomer unit and one conjugated diene. In an alternative embodiment, the nitrile rubbers comprise at least one additional copolymerizable monomer.

As $\alpha,\beta$-**ethytenicatty unsaturated nitrile-group containing monomer unit,** it is possible to use any known $\alpha,\beta$-ethylenically unsaturated nitrile-group containing monomer, preferably a ($C_3$-$C_5$) $\alpha,\beta$-ethylenically unsaturated nitrile-group containing monomer such as acrylonitrile, methacrylonitrile, ethacrylonitrile or mixtures thereof. Particular preference is given to **acrylonitrile** and **methacrylonitrile.**

The proportion of or of the sum of the $\alpha,\beta$-ethylenically unsaturated nitrile-group containing monomer units is usually from 10 to 60 % by weight, preferably from 15 to 50 % by weight, based on the total polymer. The proportions of the monomers in each case add up to 100% by weight.

The **conjugated diene** can be of any nature. Preference is given to using ($C_4$-$C_6$) conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Special preference is given to 1,3-butadiene.

The proportions of conjugated diene and $\alpha,\beta$-ethylenically unsaturated nitrile-group containing monomer units in the diene-based nitrile rubber to be used can vary within wide ranges. The proportion of or of the sum of the conjugated dienes is usually in the range from 40 % to 90 % by weight, preferably in the range from 50 % to 85 % by weight, based on the total polymer.

A particularly preferred nitrile rubber is thus a copolymer of **acrylonitrile** and **1,3-butadiene.**

Apart from the conjugated diene and the $\alpha,\beta$-ethylenically unsaturated nitrile-group containing monomer, it is possible to use one or more further **copolymerizable monomers** known to those skilled in the art, e.g. acrylonitrile, styrene, alpha-methyl styrene, $\alpha,\beta$-unsaturated monocarboxylic or dicarboxylic acids, their esters or amides. As $\alpha,\beta$-unsaturated monocarboxylic or dicarboxylic acids, preference is given to fumaric acid, maleic acid, acrylic acid and methacrylic acid. As esters of $\alpha,\beta$-unsaturated carboxylic acids, preference is given to using their alkyl esters and alkoxyalkyl esters. Particularly preferred alkyl esters of $\alpha,\beta$-unsaturated carboxylic acids are methyl acrylate, ethyl acrylate, propyl acrylate, propyl methacrylate, butyl acrylate, butyl methacrylate, 2-ethylhexyl acrylate, 2-ethylhexyl methacrylate and octyl acrylate. Particularly preferred alkoxyalkyl esters of $\alpha,\beta$-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

The optionally additional monomers can be present in amounts of from 0 % to 40 % by weight, preferably from 0.1 % to 40 % by weight, particularly preferably from 1 % to 30 % by weight, based on the total polymer. In this case, corresponding proportions of the conjugated diene or dienes and/or of the $\alpha,\beta$-ethylenically unsaturated nitrile-group containing monomer unit or units are replaced by the proportions of the additional monomers, with the proportions of all monomers in each case adding up to 100 % by weight.

**Preferred nitrile rubbers** include butadiene-acrylonitrile polymers (NBR) and butadiene-acrylonitrile-methacrylic acid polymers (XNBR). Preferred butadiene-acrylonitrile polymers have a acrylonitrile content of from 15 % to 50 % by weight based on 100 % polymer.

The **preparation of nitrile rubbers** by polymerization of the abovementioned monomers is adequately known to those skilled in the art and is comprehensively described in the polymer literature (e.g. Houben-Weyl, Methoden der Organischen Chemie Bd.14/1, 30 Georg Thieme Verlag Stuttgart 1961). Nitrile rubbers which can be used for the purpose of the invention are also commercially available, e.g. as products from the product range of the trade names Perbunan® or Krynac® from Lanxess Inc.

Polymers useful in the process of the present invention are high molecular weight materials and have Mooney viscosities (ML1+4 @ 100 °C) of from 20 to 100. This corresponds to a weight average molecular weight $M_w$ in the range of 50,000 to 600,000, preferably in the range of 150,000 to 450,000. The diene-based nitrile rubbers used also have a polydispersity PDI = $M_w/M_n$, where $M_w$ is the weight average molecular weight and $M_n$ is the number average molecular weight, in the range of 2.0 to 6.0 and preferably in the range of 2.0 to 4.0.

In an alternative embodiment, the conjugated diene units are **partially** or **fully hydrogenated.**

**Hydrogenated nitrile rubber** is produced by hydrogenation of nitrile rubber. Accordingly, the C=C double bonds of the copolymerized diene units have been completely or partly hydrogenated in HNBR. The degree of hydrogenation of the copolymerized diene units is usually in the range from 50 % to 100 %. Hydrogenated nitrile rubber is a specialty rubber which has very good heat resistance, excellent resistance to ozone and chemicals and also excellent oil resistance. The above mentioned physical and chemical properties of HNBR are associated with very good mechanical properties, in particular, a high abrasion resistance. For this reason, HNBR has found wide use in a variety of applications. HNBR is used, for example, for seals, hoses, belts and clamping elements in the automobile sector, and also for stators, oil well seals and valve seals in the field of oil extraction and also for numerous parts in the aircraft industry, the electronics industry, mechanical engineering and shipbuilding.

Commercially available HNBR grades usually have a Mooney viscosity (ML1+4@100 °C) in the range from 35 to 150, which corresponds to a weight average molecular weight $M_w$ (method of determination: gel permeation chromatography (GPC) against polystyrene equivalents) in the range from 100,000 to 600,000. The polydispersity index PDI (PDI = $M_w/M_n$, where $M_w$ is the weight average molecular weight and $M_n$ is the number average molecular weight), which gives information about the width of the molecular weight distribution, measured here is in the range of 2.0 to 6.0. The residual double bond content is usually in the range from 1 % to 25 %.

**Preferred hydrogenated nitrile rubbers** include hydrogenated butadiene-acrylonitrile polymers (HNBR) and hydrogenated butadiene-acrylonitrile-methacrylic acid polymers (HXNBR).

The hydrogenation process of the present invention is performed using an **unsupported rhodium containing catalyst (a),** wherein the **unsupported rhodium containing catalyst (a)** is tris-(triisopropylphosphine)-hydrido-rhodium, **RhH(P$i$Pr$_3$)$_3$.**

The unsupported rhodium containing catalyst (a) is not supported on an inert carrier, i.e. catalyst support material like carbon, $Al_2O_3$, $TiO_2$ or $SiO_2$. This facilitates the inventive process substantially.

The unsupported **rhodium containing catalyst (a)** can be preferably used in an **amount** in the range of 0.0054 g/1 g polymer to 0.135 g/1 g polymer.

In the present invention, the unsupported rhodium containing catalyst (a) is used with an **additive** (b) that is a ligand of general formula $R_mB$, wherein

R     is a $C_1$-$C_8$-alkyl group, preferably a $C_1$-$C_6$-alkyl group, a $C_4$-$C_8$-cycloalkyl group, preferably a $C_4$-$C_6$-cycloalkyl group, a $C_6$-$C_{15}$-aryl group, preferably a $C_6$-$C_{12}$-aryl group or a $C_7$-$C_{15}$-aralkyl group, preferably a $C_7$-$C_{12}$- aralkyl group,

B     is phosphorus, arsenic, sulfur, or a sulphoxide group, preferably phosphorus, and

m     is 2 or 3, preferably m is 2 when B is sulphur or sulphoxide, and m is 3 when B is phosphorus or arsenic.

Examples of suitable additives (b) are given in US-A-4,631,315**,** the disclosure of which is incorporated by reference. The **preferred additive** (b) is triphenylphosphine (**TPP**).

The **additive** (b) is added in an **amount** in the range of 2.25 g/1 g polymer to 6.76 g/1 g polymer, more preferably 2.50 g/1 g polymer to 4.50 g/1 g polymer.

The additive (b) is added when the desired nitrile content is achieved, and is kept for at least 1 hour before stopping the hydrogenation.

The hydrogenation process of the present invention can be undertaken in a **suitable reactor** equipped with temperature regulating and agitating means. According to the present invention diene-based nitrile rubber can be fed into the reactor and degassed as required, the unsupported rhodium containing catalyst (a) can then be added as a pure material or in some cases as a solution with a small amount of organic solvent and the reactor can then be pressurized with hydrogen or, in the alternative, the reactor can be pressurized with hydrogen and the unsupported rhodium containing catalyst (a) added as a pure material or as a solution. According to an alternative embodiment of the present invention, the unsupported rhodium containing catalyst (a) can be added as a pure material into reactor, and then the diene-based nitrile rubber can be fed into the reactor and degassed as required. At the end of the reaction when the desired nitrile content is achieved, TPP should be added and kept for at least 1 hour before termination of the reaction.

The hydrogenation process of the present invention is preferably carried out with hydrogen gas at a **pressure** of from 0.1 MPa to 10 MPa, preferably at a pressure of from 0.5 MPa to 5 MPa.

It is preferred to heat the reactor device and the diene-based nitrile rubber before the unsupported rhodium containing catalyst (a) is added. The **hydrogenation temperature** suitable for the present invention is from 0 °C to 200 °C, preferably from 25 °C to 70 °C.

The hydrogenation process of the present invention may be carried out in an alternative embodiment at **mild conditions.** Mild conditions, according to the invention means, that the process is carried out at temperatures of 70 °C or below and at a pressure of less than 1 MPa.

During the course of the hydrogenation reaction of the present invention, the hydrogen is added to the reactor. The **reaction time** is from 15 minutes to 100 hours, preferably from 1 hour to 10 hours.

When the hydrogenation reaction is complete to the extent desired, the reaction vessel can be **cooled** and vented.

The hydrogenation process of the present invention is preferably conducted in a **batch mode.**

The process of the present invention **allows a hydrogenation** of the carbon-nitrogen triple bonds (nitrile groups) which are present in hydrogenated acrylonitrile butadiene rubber (HNBR) and a tandem hydrogenation of carbon-nitrogen triple bonds (nitrile groups) and carbon-carbon double bonds (olefinic groups) in acrylonitrile butadiene rubber (NBR).

The feature of using an **unsupported rhodium containing catalyst** (a) to hydrogenate an ethylenically unsaturated or saturated polymer which is present in solution form is important for the successful performance of the process pursuant to the present invention.

The feature of using an **additive** (b) of the general formula (II) as described above, is important to prevent **visible gel formation** during the hydrogenation process.

Using such novel process a **high degree of conversion** is achieved for nitrile hydrogenation and for tandem hydrogenation of nitrile groups and olefinic groups **without gel formation.**

The invention is further illustrated but is not intended to be limited by the following examples in which all parts and percentages are by weight unless otherwise specified.

## EXAMPLES

The materials used in the hydrogenation reaction are listed in Table 1.

**Table 1:** Specification of the Materials

| Material | Supplier |
|---|---|
| Butadiene-acrylonitrile polymer (NBR; Perbunan®), containing 34 % acrylonitrile | Lanxess Inc. |
| Hydrogenated butadiene-acrylonitrile polymer (HNBR; Therban®), containing 34 % acrylonitrile | Lanxess Inc. |
| RhH(P$i$Pr$_3$)$_3$ | Synthesized according to literature procedures (Yoshida T., Okano T., Thorn D. L., etc. J. Organomet. Chem. 1979, 181, 183-201) |
| Hydrogen (99.99 %) | Praxair |
| Tetrahydrofuran (99.9 %) | Fisher Scientific |
| Triphenylphosphine (TPP) | Sigma Aldrich |

**Measurement methods:**

**CC-conversion**

The degree of hydrogenation was calculated based on the peak strength from the IR spectra according to American Standard Test Method (ASTM) D5670-95. For FT-IR analysis, the samples were coagulated with ethanol to yield dry solid rubber which will then be dissolved in MEK. Afterwards, the MEK solution was spread on NaCl disk and dried to form a rubber film for measurement. Each sample was tested twice and the average value was taken. Without undergoing any hydrogenation of carbon-carbon double bonds, the content of C≡N in both HNBR and NBR is 34 % which remains unchanged during the olefinic hydrogenation experiments. The calculation for C=C hydrogenation can be found below:

$$A(723) = \frac{A723}{A2236} \ and \ A(970) = \frac{A970}{A2236}$$

A723 = absorbance at 723 cm$^{-1}$; A970 = absorbance at 970 cm$^{-1}$; A2236 = absorbance at 2236 cm$^{-1}$

$$F = 1 + \frac{A(970)}{K(970)} + \frac{A(723)}{K(723)}$$

K(723) = 0.255, a constant specific to this peak; K(970) = 2.3, a constant specific to this peak

$$C(BR) = \frac{A(970)}{[K(970) \times F]} = carbon - carbon \ double \ bonds \ remaining \ in \ HNBR$$

$$C(HBR) = \frac{A(723)}{[K(723) \times F]}$$

$$= methylene \ groups \ formed \ from \ hydrogenation \ of \ NBR$$

$$\boldsymbol{Degree \ of \ Hydrogenation \ (mol \%) = 100 - \frac{C(BR)}{C(BR) + C(HBR)} \times 100}$$

**CN-content**

The conversion of nitrile groups was calculated based on the peak strength from the IR spectra. HNBR was used in the experiments as little (< 5%) carbon-carbon double bonds exist in it; in other words, the peak at 723 cm$^{-1}$ (-(CH$_2$)$_X$-) in the IR spectra remains unchanged. So the peak at 723 cm$^{-1}$ is used as an internal standard, and the ratio of the peak value (peak height) of the nitrile group (at wavenumber 2236 cm$^{-1}$) and peak height at 723 cm$^{-1}$ is calculated for each sample which is taken during the reaction. In the end, a series of values of the ratio is listed. It was found that the ratio decreases as the reaction proceeds, which means that the nitrile content is being reduced

**Gel formation**

Gel formation (gelling or gelation) was determined by checking if the resultant HNBR was totally soluble in MCB, MEK or THF at room temperature by the naked eye.

**Experimental design:**

A 300 ml glass-lined stainless steel autoclave, equipped with temperature control means, an agitator, a pressure gauge and a hydrogen gas addition port, was used as a reactor. 100 ml nitrile butadiene rubber (HNBR or NBR) solution (2.5 % w/w in Tetrahydrofuran) and a specific amount (according to Table 2) of RhH(P*i*Pr$_3$)$_3$ (catalyst (a)) was added into the reactor and the reactor was degassed with hydrogen gas. Example 1 to 10 comprise NBR as a substrate and Example 11 to 26 comprise HNBR as a substrate. The temperature and the hydrogen pressure according to Table 2 (e.g. Example #1: 60 °C, 3.45 MPa) was applied for 5 hours.

**7.5 g** triphenylphosphine (TPP) (additive (b)) was added (except for example 10b and 26b) when desired nitrile content was achieved, and was kept for at least 1 hour before stopping the experiment. The content of nitrile (CN) and the C=C conversion was measured after the end of hydrogenation.

A summary of all the examples is given in the following Table 2.

**Table 2: Experimental Conditions for Examples of Hydrogenation of Diene-based Nitrile Rubber in Solution form**

| Ex. # | Catalyst (a) [g/1g polymer] | Additive (b) [g] | T [°C] | $P_{H2}$ [MPa] | CN-content [%] | C=C conversion [%] | Visible gel |
|---|---|---|---|---|---|---|---|
| 1 | 0.014 | 7.5 | 60 | 3.45 | 20.2 | 63 | No |
| 2 | 0.020 | 7.5 | 60 | 3.45 | 12.6 | 82 | No |
| 3 | 0.027 | 7.5 | 60 | 3.45 | 8.5 | 92 | No |
| 4 | 0.041 | 7.5 | 60 | 3.45 | 1.2 | 96 | No |
| 5 | 0.054 | 7.5 | 60 | 3.45 | 0.1 | 94 | No |
| 6 | 0.027 | 7.5 | RT | 3.45 | 25.2 | 73 | No |
| 7 | 0.027 | 7.5 | 60 | 0.69 | 30.7 | 38 | No |
| 8 | 0.027 | 7.5 | 60 | 2.07 | 15.3 | 60 | No |
| 9 | 0.027 | 7.5 | 60 | 4.83 | 5.3 | 83 | No |
| 10a | 0.027 | 7.5 | 60 | 6.21 | 4.0 | 89 | No |
| 10b | 0.027 | 0 | 60 | 6.21 | 4.0 | 89 | Yes |
| 11 | 0.027 | 7.5 | 60 | 3.45 | 14 | N/A | No |
| 12 | 0.034 | 7.5 | 60 | 3.45 | 7.8 | N/A | No |
| 13 | 0.041 | 7.5 | 60 | 3.45 | 6.1 | N/A | No |
| 14 | 0.047 | 7.5 | 60 | 3.45 | 2.5 | N/A | No |
| 15 | 0.054 | 7.5 | 60 | 3.45 | 2.2 | N/A | No |
| 16 | 0.061 | 7.5 | 60 | 3.45 | 0.8 | N/A | No |
| 17 | 0.068 | 7.5 | 60 | 3.45 | 0.9 | N/A | No |
| 18 | 0.074 | 7.5 | 60 | 3.45 | 0.7 | N/A | No |
| 19 | 0.027 | 7.5 | 5 | 3.45 | 32.5 | N/A | No |
| 20 | 0.027 | 7.5 | RT | 3.45 | 32.7 | N/A | No |
| 21 | 0.027 | 7.5 | 80 | 3.45 | 29.9 | N/A | No |
| 22 | 0.027 | 7.5 | 60 | 0.69 | 25.3 | N/A | No |
| 23 | 0.027 | 7.5 | 60 | 2.07 | 23 | N/A | No |
| 24 | 0.027 | 7.5 | 60 | 4.83 | 8.9 | N/A | No |
| 25 | 0.027 | 7.5 | 60 | 6.21 | 6.1 | N/A | No |
| 26a | 0.027 | 7.5 | 60 | 9.65 | 7 | N/A | No |
| 26b | 0.027 | 0 | 60 | 9.65 | 7 | N/A* | Yes |
| RT: Room Temperature, i.e. 24±2 °C. N/A*: The C=C conversion was not measurable due to severe gel formation. | | | | | | | |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1. A **process** for the hydrogenation of the carbon-nitrogen triple bonds (nitrile groups) in hydrogenated acrylonitrile butadiene rubber (HNBR) and for the tandem hydrogenation of carbon-nitrogen triple bonds and carbon-carbon double bonds (olefinic groups) in nitrile butadiene rubber (NBR) in solution form, that being a copolymer comprising α,β-ethylenically unsaturated nitrile-group containing monomer unit, conjugated diene unit and optionally at least one further copolymerizable monomer, comprising subjecting the diene based nitrile rubber which is present **in solution form** to treatment with hydrogen in the presence of

    (a) an unsupported **rhodium containing catalyst,**
    wherein the unsupported rhodium containing **catalyst (a)** is tris-(triisopropylphosphine)-hydrido-rhodium, $RhH(PiPr_3)_3$, and
    (b) an **additive** of the general formula (II), preferably triphenylphosphine (TPP),

    $$R_mB \qquad (II),$$

    wherein

    R is a $C_1$-$C_8$-alkyl group, preferably a $C_1$-$C_6$-alkyl group, a $C_4$-$C_8$-cycloalkyl group, preferably a $C_4$-$C_6$-cycloalkyl group, a $C_6$-$C_{15}$-aryl group, preferably a $C_6$-$C_{12}$-aryl group or a $C_7$-$C_{15}$-aralkyl group, preferably a $C_7$-$C_{12}$- aralkyl group,
    B is phosphorus, arsenic, sulfur, or a sulphoxide group, preferably phosphorus, and
    m is 2 or 3, preferably m is 2 when B is sulphur or sulphoxide, and m is 3 when B is phosphorus or arsenic, and
    x is 2, 3 or 4, preferably x is 3 when Q is halogen and preferably x is 4 when Q is hydrogen.

2. The process according to claim 1, wherein the α,β-ethylenically unsaturated nitrile-group containing monomer unit is **acrylonitrile or methacrylonitrile.**

3. The process according to claim 1 or 2, wherein the diene based nitrile rubber is an **acrylonitrile butadiene copolymer.**

4. The process according to any of the claims 1 to 3, wherein the unsupported rhodium containing **catalyst** (a) is used in an **amount** in the range of from 0.0054 g/1 g polymer to 0.135 g/1 g polymer.

5. The process according to any of the claims 1 to 4, wherein the **additive (b)** is used in an **amount** in the range of 2.25 g/1 g polymer to 6.76 g/1 g polymer, preferably 3.38 g/1 g polymer to 4.50 g/1 g polymer.

6. The process according to any of the claims 1 to 5, wherein the hydrogenation is carried out with hydrogen gas at a **pressure** of from 0.1 MPa to 10 MPa, preferably at a pressure of from 0.5 MPa to 5 MPa.

7. The process according to any of the claims 1 to 6, wherein the hydrogenation is carried out at a **temperature** of from 0 °C to 200 °C, preferably from 25 °C to 70 °C.

8. The process according to any of the claims 1 to 7, wherein the **reaction time** is from 15 minutes to 100 hours, preferably from 1 hour to 10 hours.

9. The process according to any of the claims 1 to 8, wherein the hydrogenation is conducted in a **batch mode.**

**Patentansprüche**

1. **Verfahren** zur Hydrierung von Kohlenstoff-Stickstoff-Dreifachbindungen (Nitrilgruppen) in hydriertem Acrylnitrilbutadienkautschuk (HNBR) und zur Tandemhydrierung von Kohlenstoff-Stickstoff-Dreifachbindungen und Kohlenstoff-KohlenstoffDoppelbindungen (Olefingruppen) in Nitrilbutadienkautschuk (NBR) in Lösungsform, bei dem es sich um ein Copolymer, das eine eine ethylenisch α, β-ungesättigte Nitrilgruppe enthaltende Monomereinheit, eine konjugierte Dieneinheit und gegebenenfalls mindestens ein weiteres copolymerisierbares Monomer umfasst, handelt, wobei man bei dem Verfahren den **in Lösungsform** vorliegenden Nitrilkautschuk auf Basis eines Diens einer Behandlung mit Wasserstoff in Gegenwart von

(a) einem ungeträgerten **rhodiumhaltigen Katalysator,** wobei es sich bei dem ungeträgerten rhodiumhaltigen **Katalysator (a)** um Tris(triisopropylphosphin)hydridorhodium, $RhH(PiPr_3)_3$, handelt, und
(b) einem **Additiv** der allgemeinen Formel (II), vorzugsweise Triphenylphosphin (TPP),

$$R_mB \qquad (II),$$

unterwirft, wobei

R für eine $C_1$-$C_8$-Alkylgruppe, vorzugsweise eine $C_1$-$C_6$-Alkylgruppe, eine $C_4$-$C_8$-Cycloalkylgruppe, vorzugsweise eine $C_4$-$C_6$-Cycloalkylgruppe, eine $C_6$-$C_{15}$-Arylgruppe, vorzugsweise eine $C_6$-$C_{12}$-Arylgruppe oder eine $C_7$-$C_{15}$-Aralkylgruppe, vorzugsweise eine $C_7$-$C_{12}$-Aralkylgruppe, steht,
B für Phosphor, Arsen, Schwefel oder eine Sulfoxidgruppe, vorzugsweise Phosphor, steht und
m für 2 oder 3 steht, m vorzugsweise für 2 steht, wenn B für Schwefel oder Sulfoxid steht, und m für 3 steht, wenn B für Phosphor oder Arsen steht, und
x für 2, 3 oder 4 steht, x vorzugsweise für 3 steht, wenn Q für Halogen steht, und x vorzugsweise für 4 steht, wenn Q für Wasserstoff steht.

2. Verfahren nach Anspruch 1, wobei es sich bei der eine ethylenisch $\alpha,\beta$-ungesättigte Nitrilgruppe enthaltenden Monomereinheit um **Acrylnitril oder Methacrylnitril** handelt.

3. Verfahren nach Anspruch 1 oder 2, wobei es sich bei dem Nitrilkautschuk auf Basis eines Diens um ein **Acrylnitril-Butadien-Copolymer** handelt.

4. Verfahren nach einem der Ansprüche 1 bis 3, wobei man den ungeträgerten rhodiumhaltigen **Katalysator (a)** in einer **Menge** im Bereich von 0,0054 g / 1 g Polymer bis 0,135 g / 1 g Polymer einsetzt.

5. Verfahren nach einem der Ansprüche 1 bis 4, wobei man das **Additiv (b)** in einer **Menge** im Bereich von 2,25 g / 1 g Polymer bis 6,76 g / 1 g Polymer, vorzugsweise 3,38 g / 1 g Polymer bis 4,50 g / 1 g Polymer, einsetzt.

6. Verfahren nach einem der Ansprüche 1 bis 5, wobei man die Hydrierung mit Wasserstoffgas bei einem **Druck** von 0,1 MPa bis 10 MPa, vorzugsweise bei einem Druck von 0,5 MPa bis 5 MPa, durchführt.

7. Verfahren nach einem der Ansprüche 1 bis 6, wobei man die Hydrierung bei einer **Temperatur** von 0 °C bis 200 °C, vorzugsweise 25 °C bis 70 °C, durchführt.

8. Verfahren nach einem der Ansprüche 1 bis 7, wobei die **Reaktionszeit** 15 Minuten bis 100 Stunden, vorzugsweise 1 Stunde bis 10 Stunden, beträgt.

9. Verfahren nach einem der Ansprüche 1 bis 8, wobei man die Hydrierung **diskontinuierlich** durchführt.

**Revendications**

1. **Procédé** d'hydrogénation des triples liaisons carbone-azote (groupes nitrile) dans un caoutchouc acrylonitrile-butadiène hydrogéné (HNBR) et pour l'hydrogénation en tandem des triples liaisons carbone-azote et des doubles liaisons carbone-carbone (groupes oléfiniques) dans un caoutchouc nitrile-butadiène (NBR) sous forme de solution, celui-ci étant un copolymère comprenant un motif monomère contenant un groupe nitrile éthyléniquement $\alpha,\beta$-insaturé, un motif diène conjugué et facultativement au moins un monomère copolymérisable supplémentaire, comprenant la soumission du caoutchouc nitrile à base de diène qui est présent **sous forme de solution** à un traitement avec de l'hydrogène en présence de

(a) un **catalyseur contenant du rhodium** sans support, dans lequel le catalyseur contenant du rhodium sans support (a) est tris-(triisopropylphosphine)-hydrurorhodium, $RhH(PiPr_3)_3$, et
(b) un **additif** de formule générale (II), de préférence la triphénylphosphine (TPP),

$$R_mB \qquad (II),$$

dans lequel

R est un groupe alkyle en $C_1$-$C_8$, de préférence un groupe alkyle en $C_1$-$C_6$, un groupe cycloalkyle en $C_4$-$C_8$, de préférence un groupe cycloalkyle en $C_4$-$C_6$, un groupe aryle en $C_6$-$C_{15}$, de préférence un groupe aryle en $C_6$-$C_{12}$, ou un groupe aralkyle en $C_7$-$C_{15}$, de préférence un groupe aralkyle en $C_7$-$C_{12}$,

B est phosphore, arsenic, soufre, ou un groupe sulfoxyde, de préférence phosphore, et

m est 2 ou 3, de préférence m est 2 lorsque B est soufre ou sulfoxyde, et m est 3 lorsque B est phosphore ou arsenic, et

x est 2, 3 ou 4, de préférence x est 3 lorsque Q est halogène et de préférence x est 4 lorsque Q est hydrogène.

**2.** Procédé selon la revendication 1, dans lequel le motif monomère contenant un groupe nitrile éthyléniquement $\alpha,\beta$-insaturé est **acrylonitrile ou méthacrylonitrile.**

**3.** Procédé selon la revendication 1 ou 2, dans lequel le caoutchouc nitrile à base de diène est un **copolymère acrylonitrile-butadiène.**

**4.** Procédé selon l'une quelconque des revendications 1 à 3, dans lequel le **catalyseur** contenant du rhodium sans support (a) est utilisé en une **quantité** dans la plage de 0,0054 g/1 g de polymère à 0,135 g/1 g de polymère.

**5.** Procédé selon l'une quelconque des revendications 1 à 4, dans lequel **l'additif (b)** est utilisé en une **quantité** dans la plage de 2,25 g/1 g de polymère à 6,76 g/1 g de polymère, de préférence 3,38 g/1 g de polymère à 4,50 g/1 g de polymère.

**6.** Procédé selon l'une quelconque des revendications 1 à 5, dans lequel l'hydrogénation est conduite avec du gaz d'hydrogène à une **pression** de 0,1 MPa à 10 MPa, de préférence à une pression de 0,5 MPa à 5 MPa.

**7.** Procédé selon l'une quelconque des revendications 1 à 6, dans lequel l'hydrogénation est conduite à une **température** de 0 °C à 200 °C, de préférence de 25 °C à 70 °C.

**8.** Procédé selon l'une quelconque des revendications 1 à 7, dans lequel la **durée de réaction** est de 15 minutes à 100 heures, de préférence de 1 heure à 10 heures.

**9.** Procédé selon l'une quelconque des revendications 1 à 8, dans lequel l'hydrogénation est conduite dans un **mode discontinu.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6881797 B
- US 6683136 B
- US 6410657 B
- US 6020439 A
- US 5705571 A
- US 5057581 A
- US 3454644 A
- US 4631315 A

### Non-patent literature cited in the description

- *Applied Catalysis A: General,* 2005, vol. 296, 209-215
- *Applied Catalysis A: General,* 2008, vol. 349, 40-45
- **M. CHATTERJEE et al.** *Green Chemistry,* 2010, vol. 12, 87-93
- *Chemical Engineering Journal,* 2004, vol. 103, 13-19
- *J. Chem. Soc. Chem. Commun.,* 1979, 870
- *C. R. Chimie,* 2004, vol. 7, 769-778
- **HOUBEN-WEYL.** Methoden der Organischen Chemie. Georg Thieme Verlag Stuttgart, 1961, vol. 14/1, 30
- **YOSHIDA T. ; OKANO T. ; THORN D. L.** *J. Organomet. Chem.,* 1979, vol. 181, 183-201